(19) Europäisches Patentamt
European Patent Office
Office européen des brevets

(11) **EP 1 664 845 B1**

(12) **EUROPEAN PATENT SPECIFICATION**

(45) Date of publication and mention
of the grant of the patent:
**08.12.2010 Bulletin 2010/49**

(51) Int Cl.:
**G01V 1/30** (2006.01)

(21) Application number: **04786515.9**

(22) Date of filing: **17.08.2004**

(86) International application number:
**PCT/US2004/026627**

(87) International publication number:
**WO 2005/019799 (03.03.2005 Gazette 2005/09)**

(54) **SYSTEM AND METHOD OF HYDROCARBON DETECTION USING WAVELET ENERGY ABSORPTION ANALYSIS**

SYSTEME UND VERFAHREN ZUR KOHLENWASSERSTOFF-DETEKTION DURCH VERWENDUNG EINER WAVELET-ENERGIEABSORPTIONSANALYSE

SYSTEME ET PROCEDE DE DETECTION D'HYDROCARBURES PAR ANALYSE D'ABSORPTION D'ENERGIE DU TYPE ONDELETTE

(84) Designated Contracting States:
**AT BE BG CH CY CZ DE DK EE ES FI FR GB GR HU IE IT LI LU MC NL PL PT RO SE SI SK TR**

(30) Priority: **19.08.2003 US 643845**
**04.08.2004 US 910856**

(43) Date of publication of application:
**07.06.2006 Bulletin 2006/23**

(73) Proprietor: **Apex Spectral Technology, Inc.**
**Houston, TX 77042 (US)**

(72) Inventors:
• **LICHMAN, Eugene**
**Houston, TX 77077 (US)**
• **PETERS, Scott, W.**
**Houston, TX 77042 (US)**
• **WILEY, Robert, W.**
**Sugar Land, TX 77478 (US)**

(74) Representative: **Giovannini, Francesca et al**
**Osha Liang**
**32, avenue de l'Opéra**
**75002 Paris (FR)**

(56) References cited:
US-A- 5 173 880     US-A- 5 414 674
US-A- 5 583 825     US-A- 5 671 136
US-A- 5 966 672

• DATABASE INSPEC [Online] THE INSTITUTION OF ELECTRICAL ENGINEERS, STEVENAGE, GB; 1986, JANNSEN D ET AL: "Comparison of methods to determine Q in shallow marine sediments from vertical reflection seismograms" XP002449588 Database accession no. 2559560 & Geophysical Prospecting Netherlands, vol. 33, no. 4, June 1985 (1985-06), pages 479-497, ISSN: 0016-8025
• DATABASE INSPEC [Online] THE INSTITUTION OF ELECTRICAL ENGINEERS, STEVENAGE, GB; 1988, ASHIDA Y ET AL: "The improvement of resolution on the ultrasonic inspection method. II. Wavelet processing including absorption characteristics in a medium" XP002449589 Database accession no. 3254134 & Geophysical Exploration Japan, vol. 41, no. 2, April 1988 (1988-04), pages 146-157, ISSN: 0912-7984

EP 1 664 845 B1

**Description**

BACKGROUND

Existing seismic exploration methods primarily focus on the properties of the sound-reflecting boundaries present in the earth's interior. These methods are founded on theoretical conclusions and experimental observations that the strength of the sound reflection from the boundary itself is determined by certain lithological properties of rock within the layer above and the layer below this boundary.

However, reflection-boundary based methods are indirect at best. Reflections at each point on a boundary depend on no less than seven variables (P-wave velocity above, S wave velocity above, density above, P wave velocity below, S wave velocity below, density below, and angle). The interplay between these variables makes it difficult to determine any particular one with accuracy. Even under theoretically ideal measurement conditions, boundary-based theories sometimes fail. For example, the acoustic impedance contrast between sand and shale disappears in a wide age/compaction range, thus preventing or nearly preventing any boundary reflection at all.

When employing reflection-boundary based methods, it often becomes necessary to rely on additional "outside" information to interpret the seismic data. The additional data may come in the form of hypothesized models of the subsurface structure and data ("logs") from existing wells. (Typically, data from well logs is extrapolated away from the well bore along reflecting boundaries.) However, combining such forms of outside data with seismic data requires the use of additional assumptions that may or may not be valid. In the case of extrapolated well log data, there is no way to tell when the quality of the extrapolation has degraded to the point where more harm than good is being done.

Efforts to refine reflection-boundary based methods continue. Various existing or proposed methods employ neural networks (with "supervised" or "unsupervised" training) that combine large numbers of attributes to construct a reservoir model. Still other methods are inversion-based, combining well data, geophysical data, geologic data, reservoir engineering data, and geo-statistical data to construct a reservoir model. These methods have proven to be extremely complex (and expensive), involving many professionals from different disciplines in a chain that can be limited by its weakest link.

Accordingly, it would be desirable to have a reliable method of hydrocarbon detection that does not rely on reflection-boundary analysis, outside information, or unduly complex models. U.S. Patent No. 5,414,674 issued to Lichman ("the Lichman patent") discloses a method based on resonant energy analysis of seismic data.

The method disclosed in the Lichman patent analyzes the resonant responses generated when a seismic wave passes through a given stratum. The seismic responses are mapped onto the quefrency domain in order to separate the resonant and non-resonant components of the reflected energy. Strata that consist of predominantly elastic materials (solids and liquids) resonate in discrete frequency bands, which are represented by a quefrency spectrum with a large amplitude at high-quefrency values. Gas-bearing strata have more plastic properties and emit a more uniform response that lacks distinct resonant peaks. The Quefrency spectrum of gas-bearing strata contains a relatively higher amplitude at low-quefrency values. Therefore, strata having high concentration of natural gas hydrocarbons are located by detecting seismic data having quefrency distributions weighted toward the lower quefrencies.

The Lichman patent shows that methods not based on reflection-boundary analysis can be useful in locating gas reservoirs. There still exists a need for better methods that can be used to locate hydrocarbon (both liquid and gas) reservoirs.

SUMMARY

Disclosed herein are systems and methods of hydrocarbon detection based on wavelet energy absorption analysis. One disclosed hydrocarbon detection method embodiment comprises: a) obtaining seismic trace data for a region of interest; b) obtaining time signals from said seismic trace data for each of multiple positions in the region of interest; c) calculating a wavelet spectrum for each of multiple positions in the region of interest; d) identifying a dominant frequency at the maximum amplitude in said wavelet spectrum; and e) fitting a parameterized model to the wavelet spectrum below and/or above said dominant frequency to determine respectively a liquid and/or gas wavelet absorption factor for each of said multiple positions in the region of interest. One of the disclosed system embodiments comprises a memory and a processor. In this system embodiment, the memory has hydrocarbon detection software that, when executed by the processor, configures the processor to retrieve seismic trace data from a storage device, and further configures the processor to obtain time signals from seismic trace data for each of multiple positions in a region of interest, to calculate a wavelet spectrum for each of the multiple positions in the region of interest, to identify a dominant frequency at the maximum amplitude in said wavelet spectrum, and to fit a parameterized model to the wavelet spectrum below and/or above the dominant frequency to determine respectively a liquid and/or gas wavelet absorption factor for each of the multiple positions in the region of interest.

BRIEF DESCRIPTION OF THE DRAWING

For a detailed description of various embodiments of invention, reference will now be made to the accompanying drawings, in which:

FIG. 1 shows an illustrative context in which hydrocarbon detection systems and methods may be employed;
FIG. 2 shows a block diagram of various illustrative hydrocarbon detection systems;
FIG. 3 shows a flowchart of an illustrative seismic data acquisition method;
FIG. 4 shows a flowchart of an illustrative hydrocarbon detection method;
FIG. 5 shows a flowchart of an illustrative time interpolation method;
FIG. 6 shows a flowchart of an illustrative wavelet extraction method;
FIG. 7 shows a flowchart of an illustrative dispersion compensation method;
FIG. 8 shows a wavelet spectrum and an illustrative spectrum model;
FIGS. 9A, 9B, and 9C illustrate various stages of the method of FIG. 4;
FIG. 10 shows an illustrative display of absorption factor anomalies; and
FIG. 11 shows another illustrative display of absorption factor anomalies.

DETAILED DESCRIPTION

The following discussion is directed to various illustrative embodiments of the invention. Although one or more of these embodiments may be preferred, the embodiments disclosed should not be interpreted as limiting the scope of the disclosure or the claims. To the contrary, one skilled in the art will understand that the following description has broad application, and the discussion of any embodiment is meant only to be illustrative of that embodiment. The scope of the invention is delimited only by the attached claims.

Various hydrocarbon detection systems and methods are disclosed below. These systems and methods are not based on reflection-boundary analysis, but instead are based on changes to the seismic waves as they propagate through subsurface formations. When the seismic waves propagate through subsurface formations, their energies are attenuated to various extents depending on lithological properties of the formation along the paths of propagation. For an excellent overview of possible attenuation mechanisms and the current state of experimental measurements of absorption see Pride et al., "Permeability Dependence of Seismic Amplitudes," The Leading Edge, v. 22, no. 6, pp. 518-25 (2003). These changes (or energy attenuations) may be extracted and parameterized to fit a physically based model. When displayed in appropriate form, the parameters are indicative of both liquid and gas hydrocarbon reservoirs.

While seismic energy attenuation and its application in seismic analysis is well known in the art, most prior art methods focus on forward modeling, which predicts the seismic responses and, particularly, the energy absorption responses based on the given lithological properties of the rock (fractures, porosity, permeability, liquid saturation, etc). In forward modeling, the properties of the rock are iteratively adjusted and the predicted seismic responses are calculated until the calculated responses fit the experimental responses.

Embodiments of the invention are based on findings by the inventor that the energy attenuation depends on both the frequencies of the seismic waves and the types of fluids in the formation in a specific manner. Within the commonly-used seismic frequency range and in a partially liquid-saturated rock, energy attenuation is proportional to the liquid saturation in the rock, and this attenuation increases with decreasing frequency. On the other hand, in a partially gas-saturated rock, the energy attenuation is directly proportional to gas-saturation and this attenuation increases with frequency. For a detailed discussion of the mechanisms accounting for these phenomena and application examples, see Lichman et al., "Direct Gas Reservoir Detection from Seismic Wavelets Using Absorption," The Oil and Gas Journal, pp. 32-37, January 5, 2004; "Wavelet Energy Absorption - 1: Direct Hydrocarbon Detection by Wavelet Energy Absorption," The Oil and Gas Journal, pp. 34-39, January 12, 2004; "Wavelet Energy Absorption - 2: Here Are Velocity Aspects of Wavelet Energy Absorption," The Oil and Gas Journal, pp. 36-44, January 19, 2004; "Wavelet Energy Absorption - 3: Four Examples Show Functions of Wavelet Energy Absorption," The Oil and Gas Journal, pp. 48-52, January 25, 2004. Thus, embodiments of the invention are based on models with two independent mechanisms of frequency-dependent attenuation in partially saturated rocks.

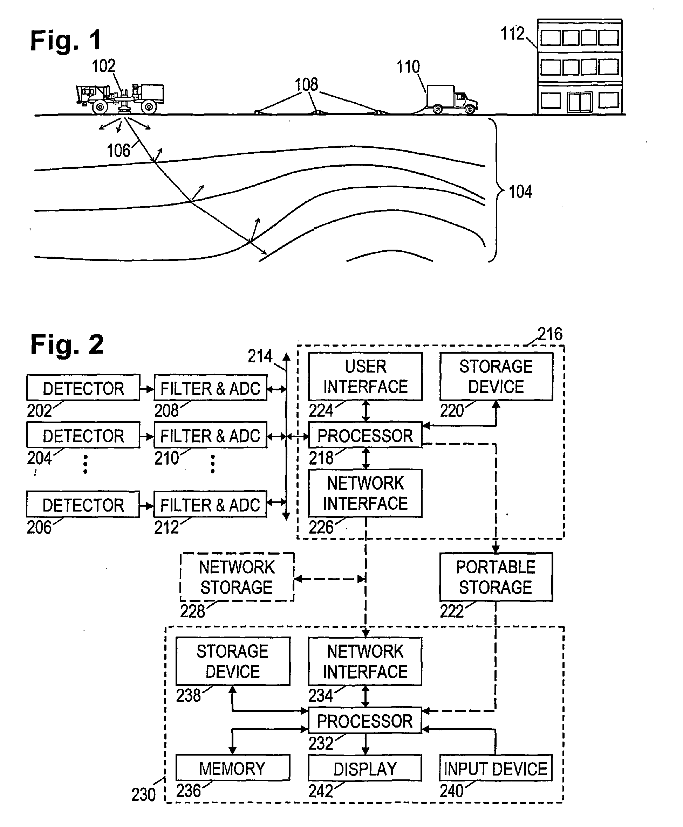

FIG. 1 shows an illustrative context for use of the disclosed systems and methods. A seismic source 102 such as a vibrator truck, a small explosion, or an air gun (in underwater surveys), generates seismic waves that propagate through subsurface formations 104. As shown by a selected propagation path 106, the seismic waves reflect and refract at boundaries between subsurface formations 104, and eventually some of the reflected seismic waves reach an array of receivers 108. The array typically includes hundreds of receivers 108 spaced in a grid pattern. Receivers 108 convert seismic waves into electrical signals that are then recorded at a recording facility 110 such as a recorder truck. Eventually the recorded data is transported or transmitted to a central facility 112 for analysis.

Seismic source 102 typically fires multiple times at different locations relative to the array of receivers 108. The array of receivers 108 may then be moved and the process may be repeated many times. The use of multiple source and receiver locations allows data from different propagation paths to be combined in a manner that attenuates noise.

FIG. 2 shows a block diagram of various systems and devices employed in gathering and analyzing seismic data. Detectors 202, 204, and 208, are transducers that convert seismic waves into electrical signals that are then amplified. Analog-to-digital converter (ADC) blocks 208, 210, and 212, receive the amplified electrical signals from detectors 202, 204, and 208, respectively. ADC blocks 208, 210, and 212, filter the amplified electrical signals and convert them to digital form. Digital sampling is performed at an interval of, for example, 1-4 milliseconds. Each receiver 108 may include at least one detector and ADC block.

A bus 214 couples ADC blocks 208, 210, and 212 to a recording system 216. Bus 214 is a simplified representation of multiple cables and/or wireless connections with corresponding adapters.

Illustrative recording system 216 includes a processor 218, a storage device 220, a user interface 224, and a network interface 226. Recording system 216 may also couple to a portage storage device 222. Processor 218 collects and formats the digital data from the receivers and stores the digital data in files on storage device 220 or portable storage device 222. The files typically include header information regarding the data in the file, e.g., the number of array receivers, the bit resolution of the digitized samples, the sampling rate, the starting time and length of the recording period, and the positions of the source and each receiver in the array. The seismic data samples are typically multiplexed and written into the file as they are received. A new file may be created for each firing of the seismic source 102.

The manner of collecting and recording the data may be controlled via a user interface 224. Typically, user interface 224 includes a display upon which processor 218 shows options that can be configured by the user, and a keypad or other input device that the user can use to communicate the desired configuration to the processor 218.

Once surveying is completed, the seismic data files may be transported or transmitted to a hydrocarbon detection system 230 via portable storage device 222 or network interface 226. Files transmitted via network interface 226 may be transmitted directly to system 230, or alternatively may be stored at an intermediate network storage device 228 and there made available for retrieval by system 230.

Hydrocarbon detection system 230 may be a general-purpose computer configured for operation as a hydrocarbon detection system through the use of software. System 230 includes a processor 232, a network interface 234, a memory device 236, a storage device 238, an input device 240, and a display device 240. Network interface 234 may couple processor 232 to recording system 216 and/or to network storage device 228, allowing processor 232 to retrieve software and data stored on recording system 216 and/or network storage device 228. Software (stored on memory device 236, storage device 238, or network storage device 228) configures processor 232 to interact with a user via input device 240 and display 242.

The user may cause processor 232 to perform a seismic data file processing program stored on storage device 238 or on network storage device 228. Processor 232 typically begins program execution by causing some or all of the program to be copied into memory 236 for fast access. With guidance from the user, the data file processing program retrieves seismic data files from portable storage device 222 or from network storage device 228 if they are not already present on local storage device 238. The data file processing program then performs pre-stack processing on the data, stacks the data, and stores the stacked data as a new seismic data set.

The user may then cause processor 232 to execute a hydrocarbon detection program. As with the data file processing program, processor 232 begins execution by copying the hydrocarbon detection program into memory 236. With guidance from the user, the hydrocarbon detection program configures processor 232 to retrieve traces from the raw seismic data files or from the stacked seismic data set. The hydrocarbon detection program configures processor 232 to process the traces as described in greater detail below, eventually producing a hydrocarbon map or volume for viewing by the user.

The following discussion describes various illustrative methods implemented by system 230. The corresponding figures show the methods in the form of flowcharts having blocks to represent component operations, and arrows to represent potential operation sequences. System 230 may carry out the component operations of the various methods in the sequences shown, or alternatively, many of the operations may be re-ordered, or even performed concurrently, without impairing the usefulness of the methods. The methods are ultimately carried out by hardware, but the methods' control logic may be implemented in the software, firmware, or hardware of system 230.

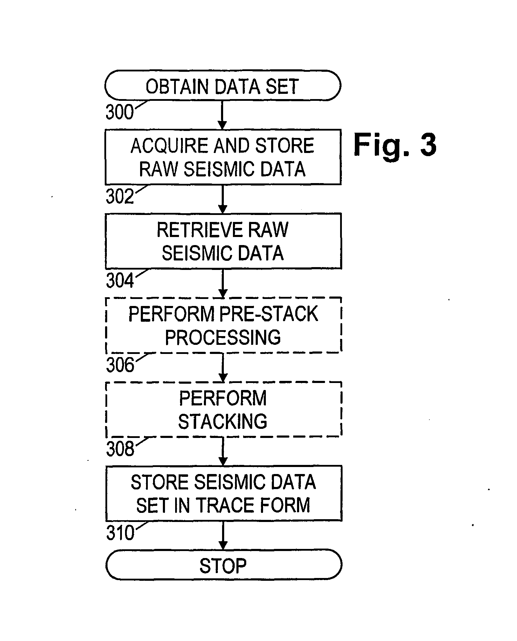

FIG. 3 shows a flowchart of an illustrative method 300 to obtain a seismic data set, including optional operations performed by a seismic data file processing program. In block 302, a recording system 216 acquires and records raw seismic data as described previously. In block 304, a hydrocarbon detection system 230 retrieves (with guidance from a user) the raw seismic data and reorders the digitized samples. As noted previously, recording system 216 stores the data as it is acquired, i.e., in time order. System 230 converts the data file format to a trace-based format, i.e., the digitized samples are reordered to provide a separate time sequence for each receiver. System 230 may further associate with each trace a map location that is halfway between the receiver and the seismic source.

Method 300 includes two optional blocks 306 and 308, which can be omitted independently of each other. In block 306, system 230 performs pre-stack processing, i.e., processing of individual traces to increase the signal to noise ratio with minimum distortion of the signal. This may take various forms such as low pass filtering, matched filtering, or phase inversion deconvolution. Phase inversion deconvolution is described in E. Lichman, "Phase Inversion Deconvolution for Surface Consistent Processing and Multiple Attenuation", SEG 69th Annual Meeting Expanded Abstracts, pp 1299-1302. In brief, phase inversion deconvolution involves taking a Fourier Transform of the trace to obtain a trace spectrum, determining a cepstrum of the trace spectrum, separating wavelet information in the cepstrum from the reflectivity and noise information, calculating a wavelet spectrum from the cepstrum wavelet information, and performing an inverse Fourier Transform to obtain the deconvoluted trace.

In block 308, system 230 identifies for each map location those traces having the map location as a midpoint between the receiver and the seismic source. These traces may be sorted based on offset, i.e., the distance between the map location and the receiver. System 230 then averages ("stacks") the identified traces having a common offset. Note that in some stacking variations, system 230 may stack all the identified traces for a map location, after first stretching the traces in the time domain as a function of offset and estimated velocities. Stacking operation 308 further enhances the signal to noise ratio of the traces. In one variation, system 230 also implements the phase moveout (PMO) correction method (or the residual phase moveout (RPMO) correction method) described in E. Lichman, "Automated Phase-based Moveout Correction", presented at the SEG 69th Annual Meeting, 1999, Houston, TX, USA. In brief, these correction methods involve determining a phase spectrum from the minimum-offset trace and applying this phase spectrum to traces having larger offsets. These correction methods may be applied immediately before stacking.

In block 310, system 230 stores the reformatted (and optionally filtered and stacked) seismic data set on network storage device 228 or local storage device 238. Most seismic data processing software is configured to access seismic data in this trace-based format. Accordingly, system 230 may conveniently perform multiple hydrocarbon detection techniques without repeating the foregoing operations.

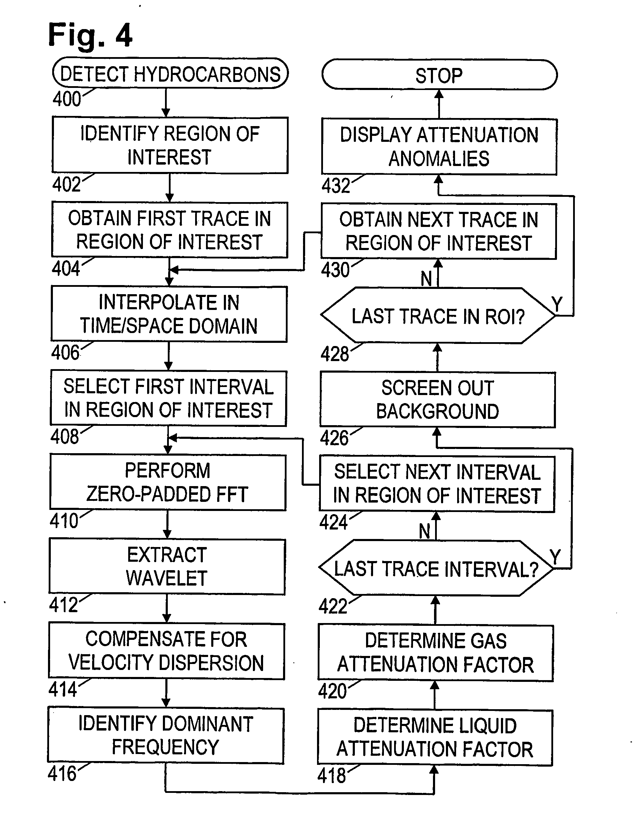

FIG. 4 shows a flowchart of an illustrative hydrocarbon detection method 400. Beginning in block 402, system 230 identifies (with guidance from a user) a region of interest the seismic data volume represented by the seismic data set. The region of interest may include the entire seismic data volume, or the region of interest may be smaller, including a subset of the traces and/or a selected time or depth range in the traces. The user may indicate the region of interest using one or more text entry fields, motion of a pointer device, scroll bars, buttons, or other information entry techniques.

In block 404, system 230 begins working through the region of interest systematically, obtaining a first trace from the seismic data set. The trace may be copied into memory 236 for faster access.

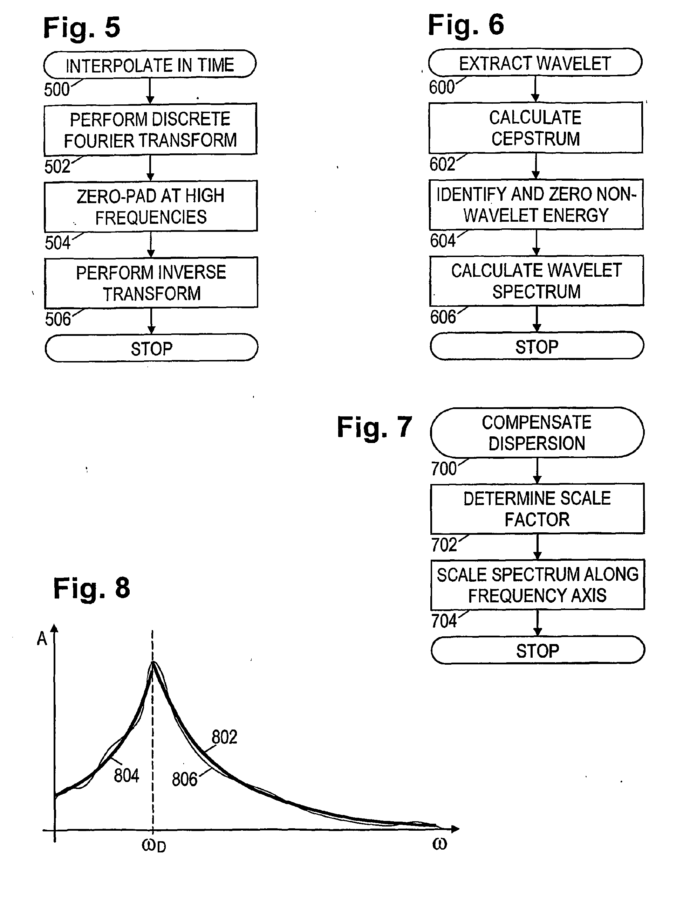

In block 406, system 230 interpolates the trace in the time domain. Time interpolation is an optional operation that is designed to increase the accuracy of subsequent operations. Accordingly, the degree of interpolation is customizable, and may be chosen to be high enough to provide reliable spectra within small time windows. For example, a trace that is originally sampled at 125 Hz (1 sample every 4 milliseconds) may be interpolated by a factor of 8 to provide 32 time samples within a 16 millisecond time window. An illustrative method of time interpolation is described further below with reference to FIG. 5.

In block 408, system 230 begins processing the trace systematically, obtaining time samples from a first trace interval in the region of interest. The interval is the size of the selected time window, e.g., 16 milliseconds. This interval represents the first position of a "sliding window" that system 230 moves through the region of interest along the trace.

In block 410, system 230 performs a Fourier Transform (such as a Fast Fourier Transform, or "FFT") to determine a discrete frequency spectrum. As noted above with reference to block 406, the seismic trace may optionally be interpolated to improve the spectral resolution after FT. Additionally, the seismic trace may be zero padded before the FT in this step in order to increase the spectral resolution. The spectral resolution of the transform depends on the size of the time interval. By padding the time samples with zeros, the size of the time interval (and hence the spectral resolution) can be increased. Thus, for example, appending enough zeros to increase the time interval from 16 milliseconds (the size of the time window) to 4 seconds, the spectral resolution can be increased to 0.25 Hz per frequency transform coefficient.

In block 412, system 230 extracts a seismic wavelet from the frequency spectrum. More specifically, system 230 determines a wavelet spectrum from the frequency spectrum determined in block 410. An illustrative method of wavelet extraction is described further below with reference to FIG. 6.

An example of an extracted wavelet spectrum is shown in FIG. 8 as curve 806. Also shown in FIG. 8 is a parameterized model of the wavelet spectrum. The wavelet spectrum has a maximum amplitude at a dominant frequency $\omega_D$. The parameterized model may be based on mechanisms for the frequency-dependent absorption of seismic wave energy. Absorption caused by gas compression dominates at high frequencies, while absorption caused by liquid motion (squirt flow) dominates at low frequencies. Accordingly, the parameterized model may include a gas absorption curve 802 above the dominant frequency ($\omega_D$), and a liquid absorption curve 804 below the dominant frequency ($\omega_D$). For Example, the model may be expressed as:

$$\hat{A}(\omega) = \begin{cases} a_1 + a_2 e^{Q_L \ln^n(\omega)} & \text{for } 0 \le \omega < \omega_D \\ a_3 e^{-Q_G \omega} & \text{for } \omega > \omega_D \end{cases} \tag{1}$$

where $\omega$ is frequency, $n$ is a real number, $a_1$, $a_2$, and $a_3$ are constants, $Q_L$ is a liquid absorption factor, and $Q_G$ is a gas absorption factor. These wavelet energy absorption factors ($Q_L$ and $Q_G$) are independent of frequency but strongly dependent on a number of lithological properties. For present purposes, it is sufficient to note that the liquid absorption factor $Q_L$ increases with permeability and decreases as the liquid viscosity increases. If there is more than one liquid present in the pore space, then $Q_L$ will be related to the relative permeability of the liquids. The gas absorption factor $Q_G$ is proportional to the bulk volume of the gas, which is defined as the porosity times the gas saturation times the thickness of the reservoir.

Equation (1) represents a general model that accounts for energy attenuation by liquid on the low frequency side and energy attenuation by gas on the high frequency side. One of ordinary skill in the art would appreciate that other variations of this model are possible without departing from the scope of the invention. For example, in Equation (1), $n$ is a real number, which, together with $a_1$ and $a_2$, may be used to fine tune the model to better fit energy attenuation by the liquid in the experimental data. If $n = 1$, then a simplified model is obtained, in which the constants $a_1$ and $a_2$ can be used to fine tune the model. In this case, Equation (1) can be simplified as:

$$\hat{A}(\omega) = \begin{cases} a_1 + a_2 \, e^{Q_L \ln(\omega)} & \text{for } 0 \le \omega < \omega_D \\ a_3 \, e^{-Q_G \omega} & \text{for } \omega > \omega_D \end{cases} \tag{2}$$

In addition, Equation (2) may be further simplified as:

$$\hat{A}(\omega) = \begin{cases} a_1 + a_2 \, \omega^{Q_L} & \text{for } 0 \le \omega < \omega_D \\ a_3 \, e^{-Q_G \omega} & \text{for } \omega > \omega_D \end{cases} \tag{3}$$

While the above-described models, e.g., Equations (1) - (3), are based on the mechanisms underlying gas and liquid attenuation of the seismic energy, embodiments of the invention are not so limited. As it will become apparent in the following description, embodiments of the invention depend on a "relative" contrast, between a hydrocarbon reservoir and its surrounding formation. The relative contrast may be based on a parameter related to seismic energy attenuation by liquid and/or gas. Embodiments of the invention do not depend on accurate determination of the "true" gas or liquid attenuation constants (absorption factors) ($Q_G$ and $Q_L$). Therefore, other forms of equations (models) that can fit the apparently exponential decays on both sides of the peak centering at the dominant frequency ($\omega_D$) can potentially be used. However, in general, the mechanism-based models, as shown in Equations (1) - (3), will produce more reliable contrast and are preferred.

After extracting the wavelet in block 412 (FIG. 4), system 230 compensates for velocity dispersion effects on the wavelet spectrum. An illustrative method of velocity dispersion compensation is described further below with reference to FIG. 7.

In block 416, system 230 identifies the dominant frequency $\omega_D$ of the wavelet spectrum, i.e., the frequency at which the spectrum amplitude is a maximum. In block 418, system 230 determines the liquid absorption factor by fitting the liquid absorption curve 804 to the wavelet spectrum 806 at frequencies below the dominant frequency ($\omega_D$). A least-squares curve fitting technique may be employed to determine the optimal values of the constants $n$, $a_i$ and the liquid absorption factor $Q_L$.

In block 420, system 230 determines the gas absorption factor by fitting the gas absorption curve 802 to the wavelet spectrum 806 at frequencies above the dominant frequency ($\omega_D$). Again, a least-squares curve fitting technique may be employed to determine the optimal values of the constant $a_3$ and the gas absorption factor $Q_G$.

In block 422, system 230 determines whether the last time interval in the region of interest for the trace has been processed. If not, system 230 increments the sliding time window to its next position along the trace in block 424, and repeats the operations of blocks 410-424 until all the trace's time intervals that are in the region of interest have been processed. The sliding increment provided in block 424 is configurable. The increment may be a fraction of the time window, and alternatively may be greater than the size of the time window.

Once gas and liquid absorption factors ($Q_G$ and $Q_L$) have been determined for each time window position in the region of interest on a trace, system 230 progresses to block 426 from block 422. At this point, system 230 the gas and liquid absorption factors can be shown as curves, i.e., plotted as a function of time for the trace. These liquid and gas absorption factor curves are of interest and may be saved for later processing. However, it is the anomalies of the liquid and gas absorption factors that are of particular interest to the present illustrative method. Thus, in block 426, system 230 processes the liquid and gas absorption factors to identify anomalies.

The processing in block 426 may take various forms. In some embodiments, the liquid and gas absorption factors are processed individually, whereas in different embodiments, anomalies are determined by combining the absorption factors in some fashion. As one particular example, system 230 determines a background curve for each absorption factor by using a "best fit" straight line or slowly changing curve (e.g., a low-order polynomial curve). System 230 then determines that an anomaly exists where the gas or liquid absorption factor curve deviates from the "best fit" straight line or curve by more than a threshold amount. Different threshold amounts may be employed for the gas and liquid absorption factors.

As another particular example, a high pass filter may be applied to a liquid or gas absorption factor curve to identify relatively sudden changes in absorption factors. These changes may be taken as boundaries of an anomaly, and the original absorption factor curves may be used to determine anomaly magnitudes. In further examples, the first and/or second order derivatives of the liquid or gas absorption factor curves may be used to identify the absorption factor anomalies.

"Anomaly" as used herein refers to substantially different absorption factor in a region as compared with the neighboring regions. In some embodiments of the invention, the regions having absorption factor anomalies may be automatically determined by a method of the invention. In some embodiments, the regions having absorption factor anomalies may not be explicitly determined. Instead, the absorption factor curves may simply be displayed to allow the user to visually identify the regions of absorption factor anomalies.

In block 428, system 230 determines whether the last trace in the region of interest has been processed to measure absorption factor anomalies. If not, system 230 selects the next trace in block 430, and repeats blocks 406-430 until absorption factor anomalies have been sought in all traces in the region of interest. In some circumstances it may be unnecessary to process every trace, e.g. the desired resolution is less than the available resolution. In such circumstances, a pattern of traces may be selected, allowing some of the traces in the region of interest to be skipped. For example, only every other trace or every third trace is processed.

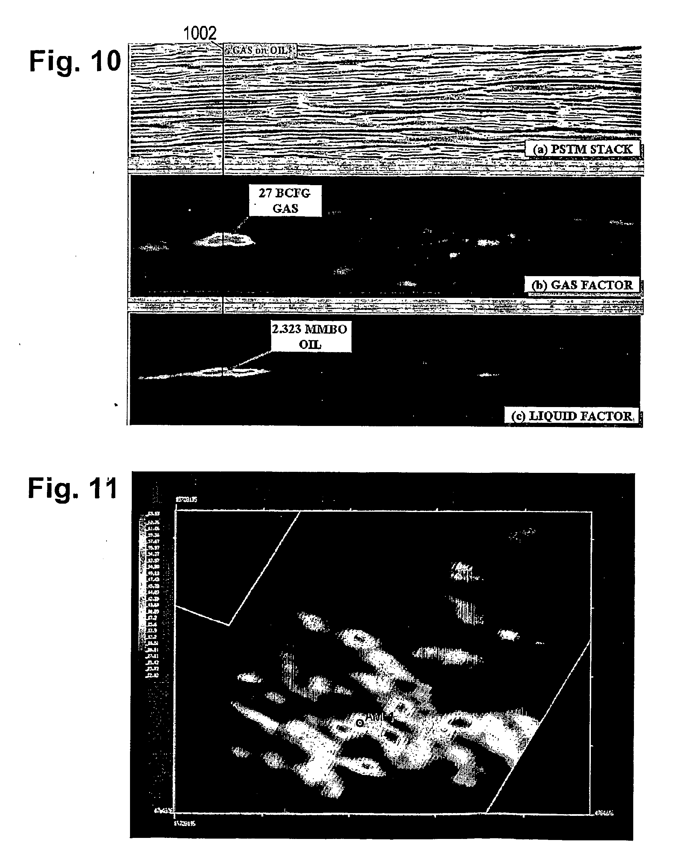

Once all selected traces have been processed, in block 432 system 230 displays the absorption factors or the absorption factor anomalies. The display format is configurable. Thus, the absorption factor (anomalies) may be viewed as a function of one axis (e.g., a time axis for a trace), two axes (e.g., a map view, a contour map, a color coded map, or a vertical cross-section), or more. Examples of a three-axis image dependence include: a perspective view of a data volume, an animated "fill" of a data volume, and a perspective view of intersecting vertical cross-sections. Other forms of configurability are also contemplated. For example, the display may take the form of a printed image and/or a video image. The display format may use color, gray-scale, or contour lines to depict the absorption factor values or the anomaly measurements. The absorption factors or anomaly measurements may be overlaid on views of seismic trace data. The liquid and gas absorption factors or anomalies may be displayed in separate images, or they may be combined into a single image. Finally, the display may be interactive, allowing the user to dynamically configure various display options. Other examples of display formats are discussed further below with respect to Figs. 10 and 11.

The typical scale of the gas or oil reservoirs requires a time-window size between 8 and 80 milliseconds. A window of this size does not contain enough signal samples (data points) to reliably compute the spectrum using the conventional FFT. Therefore, the seismic traces need to be interpolated. The interpolation procedure should be frequency-domain invariant. FIG. 5 shows an illustrative interpolation method 500, which is suitable for implementing the operation of block 406 in FIG. 4. Beginning in block 502, system 230 performs a Fourier Transform (e.g., a fast Fourier Transform ("FFT")) on the trace, thereby producing a discrete frequency spectrum of the trace. Interpolation is then accomplished by zero padding (i.e., increasing the number of data points) in the discrete frequency spectrum, e.g., increasing the number of data points from $n$ to 8n to interpolate by a factor of 8. The zero padding can be by adding data points to the high frequency end beyond the original Nyquist frequency so as to extend to the Nyquist frequency to a new, desired frequency (block 504). An exemplary method of interpolation is illustrated in FIG. 5 of U.S. Patent No. 5,414,674. In block 506, system 230 performs an inverse Fourier Transform of the padded discrete frequency spectrum. This inverse transform results in the desired, interpolated time-domain trace.

Interpolation of the seismic traces permits the computation of more reliable instantaneous spectrum after Fourier Transformation. This in turn allows wavelets to be reliably extracted from the instantaneous spectrum. FIG. 6 shows an illustrative wavelet extraction method 600, which is suitable for implementing the operation of block 412 in FIG. 4. Beginning in block 602, system 230 operates on the discrete frequency spectrum $T(w)$ to calculate the real cepstrum $C(t)$. The real cepstrum may be calculated as:

$$C(t) = \dot{FT}\{\ln|T(w)|\} \tag{4}$$

In words, system 230 determines the magnitude of the discrete frequency spectrum $T(w)$, i.e., by Fourier Transformation (e.g., short-window FT) of the interpolated seismic trace, calculates the natural logarithm (or regular logarithm) of this instantaneous spectrum, and then performs a second Fourier Transform on the values obtained from the logarithm calculation to produce the cepstrum. In this special case, an inverse Fourier Transform on the values obtained from the logarithm calculation will also produce a useable cepstrum. The real cepstrum $C(t)$ ranges from $-t_{max}$ to $+t_{max}$, and is symmetric about the origin $t = 0$.

Under certain measurement conditions described in Lichman, "Informational Capacity of Wavefield Measurements", J. of Computational Acoustics, Vol. 9, No. 4 (2001) 1395-1406, (which is hereby incorporated by reference) the cepstrum calculation segregates the wavelet information from the reflectivity information (and most of the noise information). These measurement conditions are nearly always satisfied. Accordingly, the wavelet information can be extracted in the cepstrum domain as the values between $t_{LOW}$ and $t_{HIGH}$. The seismic source type and other measurement conditions may affect the optimal values of $t_{LOW}$ and $t_{HIGH}$. In one embodiment, $t_{HIGH}$ is a positive number fixed at 40% of $t_{max}$, and $t_{LOW}$ is a negative number having a magnitude approximately equal to that of $t_{HIGH}$. The value of $t_{LOW}$ may be interactively adjusted based on the seismic source type (e.g., vibroseis, dynamite, air gun).

In block 604, system 230 zeros all real cepstrum values outside the range $t_{LOW}$ to $t_{HIGH}$, thereby obtaining a wavelet cepstrum $W(t)$. In block 606, system 230 calculates the wavelet spectrum $A(w)$ from the wavelet cepstrum $W(t)$ as follows:

$$A(\omega) = \exp[FT\{W(t)\}] \tag{3}$$

In words, system 230 performs a Fourier Transform on the wavelet spectrum $W(t)$, and exponentiates each of the transform coefficients to obtain the wavelet spectrum $A(w)$.

The wavelet is not only affected by energy attenuation, but also by velocity dispersion. For example, when a wavelet propagates from a region with low group velocity into a region wiht high group velocity, it stretches more quickly in space. This stretch of the wavelet in space is related to the wavelet stretch as a function of its two-way travel time. The consequence of the wavelet stretch in time domain is that the spectrum of the wavelet is compressed in the frequency domain. The compression in the frequency domain will result in apparently higher energy attenuation factors. Therefore, the velocity dispersion in the wavelet shoul be compensated for. Otherwise, the calculated gas or liquid attenuation factors will not be accurate.

FIG. 7 shows an illustrative compensation method 700 for velocity dispersion. Method 700 is suitable for implementing the operation of block 414 in FIG. 4. Beginning in block 702, system 230 measures the length $L$ of the wavelet spectrum and determines a corresponding scale factor, e.g., $s=D/L$, where $D$ is a predetermined constant. A number of different length measurements may be employed. In one embodiment, the dominant frequency is used as a length measurement. In another embodiment, the length measurement is based on the first frequency (greater than the dominant frequency) at which the spectrum magnitude falls below a predetermined threshold value. In yet another embodiment, the length measurement is based on the 3dB width of the spectrum, i.e., the distance between the points at which the spectrum equals half the maximum value.

In block 704, system 230 scales the frequency axis, e.g., $A_{comp}(\omega) = A(s\omega)$, wherein $s$ is a scale factor chosen to standardize the "length" of the wavelet spectrum. System 230 may scale each wavelet spectrum to a predetermined length, e.g., $D=1$. This scaling operation adequately compensates for velocity dispersion.

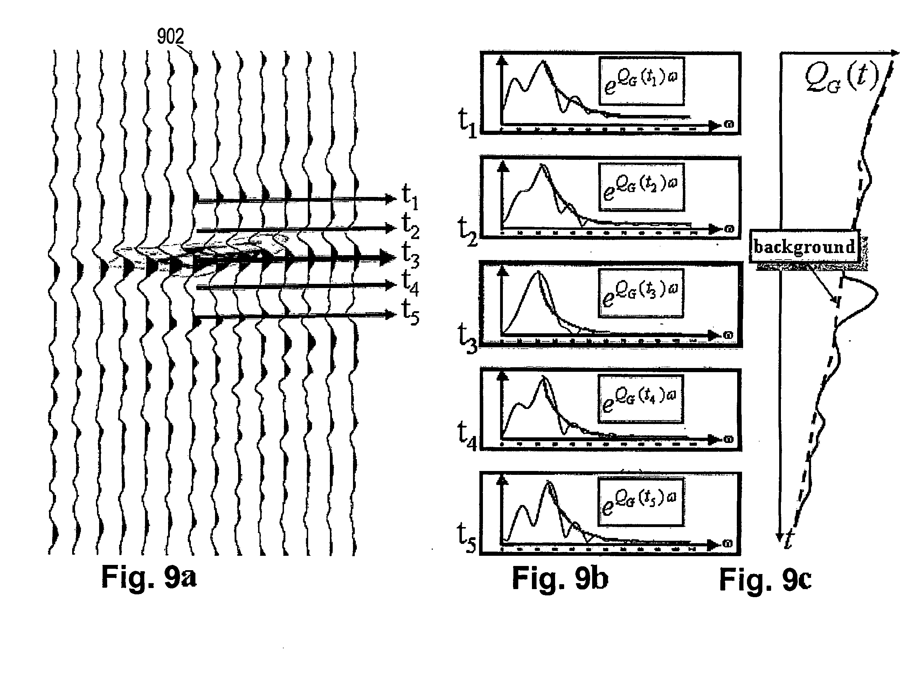

FIGS. 9A-9C illustrate various stages of method 400. FIG. 9A shows a set of seismic traces (albeit in analog form) from which a particular trace, trace 902, has been selected for processing. A time window (not specifically shown) is moved along the entire length of the trace, and at each position a wavelet is extracted. Five specific positions are labeled as $t_1$, $t_2$, $t_3$, $t_4$, and $t_5$.

FIG. 9B shows a set of five extracted wavelet spectra that correspond to the five specific time window positions of FIG. 9A. Also shown are the least-squares fit gas absorption curves, i.e., the curves that were determined in block 420. The gas absorption factor $Q_G$ has accordingly been determined for these five specific positions as well as all the other time window positions along trace 902.

FIG. 9C shows the gas absorption factor $Q_G$ as a function of time window position. Also shown is a gas absorption factor background estimate. A strong anomaly is evident at a position corresponding to $t_3$ in FIG. 9A.

FIG. 10 shows an illustrative display of absorption factor anomalies. The display of FIG. 10 includes three panels labeled (a) Pre-Stack Time Migrated (PSTM) stack, (b) Gas Factor, and (c) Liquid Factor. The vertical axis of each panel is a time axis, and the horizontal axis is a geographical position axis. Thus each panel shows a vertical cross-section of the formations. A vertical black line 1002 crosses the three panels at the location of a producing well (both gas and oil are produced).

The PSTM panel shows seismic wave amplitude data using color to indicate amplitude value. Many high amplitude bands cross the PSTM panel horizontally, making hydrocarbon detection difficult.

The gas factor panel shows the gas absorption factor anomalies calculated by system 230 from the PSTM stack data. As expected, a strong anomaly is present around the well position clearly identifying the concentration of gas. Several other ghostly anomalies are present in other regions of the panel, but it is clear that the commercially available gas hydrocarbons are already being produced.

The liquid factor panel shows the liquid absorption factor anomalies calculated by system 230 from the PSTM stack data. As expected, a strong anomaly is present around the well position clearly identifying the liquid reservoir. A few other ghostly anomalies are present in other regions of the panel, but again it is clear that the commercially available liquid hydrocarbons are already being produced.

FIG. 11 shows another illustrative display. In the display of FIG. 11, the maximum absorption has been extracted from a 50 millisecond envelop bounded by two interpreted time horizons and then draped on a top time horizon which is at a depth of roughly 5,500 meters. The vertical axis represents position along a north-south axis, and the horizontal axis represents position along an east-west axis. The display shows gas absorption factor anomalies as a function of position, using color to indicate anomaly magnitude. At least ten strong anomalies are present, indicating locations of commercially viable concentrations of gaseous hydrocarbons. The strong anomalies are generally surrounded and connected by lesser anomalies.

Though the foregoing methods and operations have been described with respect to seismic trace data having a time axis, they may readily be adapted to seismic trace data having a depth axis.

While specific embodiments of the invention have been disclosed and described above, the invention is not limited by the discussion, but instead is limited only by the scope of the appended claims.

**Claims**

1. A method for detecting hydrocarbons, the method comprising:

   obtaining seismic trace data for a region of interest;
   obtaining time signals from said seismic trace data for each of multiple positions in the region of interest;
   calculating a wavelet spectrum for each of multiple positions in the region of interest;
   identifying a dominant frequency at the maximum amplitude in said wavelet spectrum; and
   fitting a parameterized model to the wavelet spectrum below and/or above said dominant frequency to determine respectively a liquid and/or gas wavelet absorption factor for each of said multiple positions in the region of interest.

2. The method of claim 1, wherein the parameterized model is expressible as:

$$\hat{A}(\omega) = \begin{cases} a_1 + a_2\omega^{Q_L} & \text{for } 0 \le \omega < \omega_D \\ a_3 e^{-Q_G\omega} & \text{for } \omega > \omega_D \end{cases}$$

wherein $\omega$ is frequency, $\omega_D$ is a dominant frequency, $a_1$, $a_2$, and $a_3$ are constants, $Q_L$ is a liquid absorption factor, and $Q_G$ is a gas absorption factor.

3. The method of claim 1, wherein the parameterized model is expressible as:

$$\hat{A}(\omega) = \begin{cases} a_1 + a_2 e^{Q_L \ln^n(\omega)} & \text{for } 0 \le \omega < \omega_D \\ a_3 e^{-Q_G\omega} & \text{for } \omega > \omega_D \end{cases}$$

where $\omega$ is frequency, $n$ is a real number, $\omega_D$ is a dominant frequency, $a_1$, $a_2$, and $a_3$ are constants, $Q_L$ is a liquid absorption factor, and $Q_G$ is a gas absorption factor.

4. The method of claim 1, wherein said fitting comprises:

scaling the wavelet spectrum to a predetermined length.

5. The method of claim 1, wherein said calculating comprises:

performing time interpolation on the trace data.

6. The method of claim 1, wherein said calculating comprises:

selecting trace intervals with a sliding window;
padding the trace intervals with zero values; and
performing a Fourier Transform on the zero-padded trace intervals to determine discrete frequency spectra.

7. The method of claim 6, wherein said calculating further comprises:

transforming each of the discrete frequency spectra into a corresponding cepstrum;
separating wavelet information in each cepstrum from reflectivity information; and
determining a corresponding wavelet spectrum from the wavelet information in each cepstrum.

8. The method of claim 1, further comprising:

determining a background absorption function for the at least one wavelet energy absorption factor.

9. The method of claim 8, wherein said determining comprises:

fitting a straight line or a smooth curve to the at least one wavelet energy absorption factor.

10. The method of claim 8, further comprising:

finding absorption factor anomalies by comparing the background absorption function with the at least one wavelet energy absorption factor.

11. The method of claim 10, wherein said comparing comprises:

subtracting the background absorption function from the at least one wavelet energy absorption factor to produce the absorption factor anomalies.

12. The method of claim 10, further comprising:

displaying the absorption factor anomalies as a function of position.

13. The method of claim 12, further comprising:

identifying at least one absorption factor anomaly that exceeds a threshold as a probable hydrocarbon reservoir.

14. The method of claim 1, further comprising:

identifying wavelet energy absorption anomalies within the region of interest from the at least one wavelet energy absorption factor; and
generating a display of the wavelet energy absorption anomalies within the region of interest.

15. The method of claim 14, wherein said identifying wavelet energy absorption anomalies comprises:

determining a background function from the wavelet energy absorption factor; and
comparing the background function to the wavelet energy absorption factor to identify the wavelet energy absorption anomalies.

**16.** The method of claim 14, wherein the at least one wavelet energy absorption factor is indicative of gas absorption.

**17.** The method of claim 14, wherein the at least one wavelet energy absorption factor is indicative of liquid absorption.

**18.** The method of claim 14, wherein said calculating includes:

determining wavelet energy absorption factor values that provide a least-square-error fit between a parameterized model and wavelet spectra extracted from the seismic data set.

**19.** The method of claim 18, wherein the parameterized model is expressible as:

$$\hat{A}(\omega) = \begin{cases} a_1 + a_2\omega^{Q_L} & \text{for } 0 \leq \omega < \omega_D \\ a_3 e^{-Q_G\omega} & \text{for } \omega > \omega_D \end{cases}$$

wherein $\omega$ is frequency, $\omega_D$ is a frequency where the wavelet spectrum reaches a maximum, $a_1$, $a_2$, and $a_3$ are constants, $Q_L$ is a liquid absorption factor, and $Q_G$ is a gas absorption factor.

**20.** The method of claim 18, wherein the parameterized model is expressible as:

$$\hat{A}(\omega) = \begin{cases} a_1 + a_2 e^{Q_L \ln^n(\omega)} & \text{for } 0 \leq \omega < \omega_D \\ a_3 e^{-Q_G\omega} & \text{for } \omega > \omega_D \end{cases}$$

where $\omega$ is frequency, n is a real number, $\omega_D$ is a dominant frequency, $a_1$, $a_2$, and $a_3$ are constants, $Q_L$ is a liquid absorption factor, and $Q_G$ is a gas absorption factor.

**21.** The method of claim 18, wherein said calculating further includes:

scaling the wavelet spectra extracted from the seismic data set to a standard length before said determining.

**22.** A hydrocarbon detection system (230) that comprises:

a memory (236) having hydrocarbon detection software; and
a processor (232) coupled to the memory (236) to execute the hydrocarbon detection software, wherein the hydrocarbon detection software configures the processor (232) to retrieve seismic trace data from a storage device (238), and further configures the processor (232) to obtain time signals from the seismic trace data for each of multiple positions in a region of interest, to calculate a wavelet spectrum for each of the multiple positions in the region of interest, to identify a dominant frequency at the maximum amplitude in said wavelet spectrum, and to fit a parameterized model to the wavelet spectrum below and/or above the dominant frequency to determine respectively a liquid and/or gas wavelet absorption factor for each of the multiple positions in the region of interest.

**23.** The system (230) of claim 22, where the parameterized model is expressible as:

$$\hat{A}(\omega) = \begin{cases} a_1 + a_2\omega^{Q_L} & \text{for } 0 \leq \omega < \omega_D \\ a_3 e^{-Q_G\omega} & \text{for } \omega > \omega_D \end{cases}$$

wherein $\omega$ is frequency, $\omega_D$ is a frequency where the wavelet spectrum reaches a maximum, $a_1$, $a_2$, and $a_3$ are constants, $Q_L$ is a liquid absorption factor, and $Q_G$ is a gas absorption factor.

**24.** The system (230) of claim 22, wherein the parameterized model is expressible as:

$$\hat{A}(\omega) = \begin{cases} a_1 + a_2 e^{Q_L \ln^n(\omega)} & \text{for } 0 \le \omega < \omega_D \\ a_3 e^{-Q_G \omega} & \text{for } \omega > \omega_D \end{cases}$$

where $\omega$ is frequency, n is a real number, $\omega_D$ is a dominant frequency, $a_1$, $a_2$, and $a_3$ are constants, $Q_L$ is a liquid absorption factor, and $Q_G$ is a gas absorption factor.

**25.** The system (230) of claim 22, wherein the hydrocarbon detection software configures the processor (232) to scale each wavelet spectrum to a standard length.

**26.** The system (230) of claim 22, wherein as part of calculating the wavelet spectrum for each of multiple positions, the hydrocarbon detection software configures the processor (232) to perform time interpolation on the seismic trace data.

**27.** The system (230) of claim 22, wherein as part of configuring the processor (232) to process the seismic trace data, the hydrocarbon detection software configures the processor (232) to select trace intervals with a sliding window, configures the processor (232) to append zero-valued trace samples to the trace intervals, and configures the processor (232) to perform a Fourier Transform on each trace interval expanded in this fashion to obtain corresponding discrete frequency spectra.

**28.** The system (230) of claim 27, wherein as another part of configuring the processor (232) to process the seismic trace data, the hydrocarbon detection software configures the processor (232) to transform each discrete frequency spectrum into a corresponding cepstrum, and further configures the processor (232) to determine a corresponding wavelet spectrum from wavelet information in each cepstrum.

**29.** The system (230) of claim 22, wherein the hydrocarbon detection software further configures the processor (232) to determine a background absorption function for the wavelet absorption factor.

**30.** The system (230) of claim 29, wherein as part of determining the background absorption function, the hydrocarbon detection software configures the processor (232) to fit a straight line or a smooth curve to the wavelet energy absorption factor.

**31.** The system (230) of claim 29, wherein the hydrocarbon detection software further configures the processor (232) to find absorption factor anomalies by combining the background absorption function with the wavelet absorption factor.

**32.** The system (230) of claim 31, wherein as part of said combining, the hydrocarbon detection software configures the processor (232) to subtract the background absorption function from the wavelet energy absorption factor to determine a deviation curve, and further configures the processor (232) to extract deviation curve values above a threshold to find absorption factor anomalies.

**33.** The system (230) of claim 31, wherein the system (230) further comprises:

a display (242) coupled to the processor (232),
wherein the hydrocarbon detection software configures the processor (232) to display the absorption factor anomalies as a function of position.

**34.** The system (230) of claim 33, wherein the hydrocarbon detection software configures the processor (232) to identify at least one absorption factor anomaly that exceeds a threshold as a probable hydrocarbon reservoir.

**Patentansprüche**

**1.** Verfahren zum Nachweisen von Kohlenwasserstoffen, wobei das Verfahren umfasst:

Erhalten seismischer Spurendaten für ein interessierendes Gebiet;

Erhalten von Zeitsignalen aus den seismischen Spurendaten für jeden von mehreren Orten in dem interessierenden Gebiet;
Berechnen eines Wavelet-Spektrums für jeden von mehreren Orten in dem interessierenden Gebiet;
Identifizieren einer Grundfrequenz mit der maximalen Amplitude in dem Wavelet-Spektrum; und
Anpassen eines parametrisierten Modells an das Wavelet-Spektrum unter und/oder über der Grundfrequenz zum Bestimmen eines jeweiligen Flüssigkeits- und/oder Gas-Wavelet-Absorptionsfaktors für jeden der mehreren Orte in dem interessierenden Gebiet.

2. Verfahren nach Anspruch 1, bei dem das parametrisierte Modell ausdrückbar ist als:

$$\hat{A}(\omega) = \begin{cases} a_1 + a_2\omega^{Q_L} & \text{für } 0 \le \omega < \omega_D \\ a_3 e^{-Q_G\omega} & \text{für } \omega > \omega_D \end{cases}$$

wobei $\omega$ die Frequenz ist, $\omega_D$ eine Grundfrequenz ist, $a_1$, $a_2$ und $a_3$ Konstanten sind, $Q_L$ ein Flüssigkeitsabsorptionsfaktor ist und $Q_G$ ein Gasabsorptionsfaktor ist.

3. Verfahren nach Anspruch 1, bei dem das parametrisierte Modell ausdrückbar ist als:

$$\hat{A}(\omega) = \begin{cases} a_1 + a_2 e^{Q_L \ln^n(\omega)} & \text{für } 0 \le \omega < \omega_D \\ a_3 e^{-Q_G\omega} & \text{für } \omega > \omega_D \end{cases}$$

wobei $\omega$ die Frequenz ist, $n$ eine reelle Zahl ist, $\omega_D$ eine Grundfrequenz ist, $a_1$, $a_2$ und $a_3$ Konstanten sind, $Q_L$ ein Flüssigkeitsabsorptionsfaktor ist und $Q_G$ ein Gasabsorptionsfaktor ist.

4. Verfahren nach Anspruch 1, bei dem das Anpassen umfasst:

Skalieren des Wavelet-Spektrums auf eine vorgegebene Länge.

5. Verfahren nach Anspruch 1, bei dem das Berechnen umfasst:

Ausführen einer Zeitinterpolation an den Spurendaten.

6. Verfahren nach Anspruch 1, bei dem das Berechnen umfasst:

Auswählen von Spurenintervallen mit einen Gleitfenster;
Auffüllen der Spurenintervalle mit Nullwerten; und
Ausführen einer Fourier-Transformation an den mit null aufgefüllten Spurenintervallen zum Bestimmen diskreter Frequenzspektren.

7. Verfahren nach Anspruch 6, bei dem das Berechnen ferner umfasst:

Transformieren jedes der diskreten Frequenzspektren in ein entsprechendes Kepstrum;
Separieren der Wavelet-Informationen in jedem Kepstrum von Informationen über das Reflexionsvermögen; und
Bestimmen eines entsprechenden Wavelet-Spektrums aus den Wavelet-Informationen in jedem Kepstrum.

8. Verfahren nach Anspruch 1, das ferner umfasst:
Bestimmen einer Hintergrundabsorptionsfunktion für den mindestens einen Wavelet-Energie-Absorptionsfaktor.

9. Verfahren nach Anspruch 8, bei dem das Bestimmen umfasst:

Anpassen einer Geraden oder einer glatten Kurve an den mindestens einen Wavelet-Energie-Absorptionsfaktor.

10. Verfahren nach Anspruch 8, das ferner umfasst:

Ermitteln von Absorptionsfaktoranomalien durch Vergleichen der Hintergrundabsorptionsfunktion mit dem mindestens einen Wavelet-Energie-Absorptionsfaktor.

11. Verfahren nach Anspruch 10, bei dem das Vergleichen umfasst:

Subtrahieren der Hintergrundabsorptionsfunktion von dem mindestens einen Wavelet-Energie-Absorptionsfaktor zum Erzeugen der Absorptionsfaktoranomalien.

12. Verfahren nach Anspruch 10, das ferner umfasst:

Anzeigen der Absorptionsfaktoranomalien als eine Funktion des Ortes.

13. Verfahren nach Anspruch 12, das ferner umfasst:

Identifizieren mindestens einer Absorptionsfaktoranomalie, die einen Schwellenwert übersteigt, als eine wahrscheinliche Kohlenwasserstofflagerstätte.

14. Verfahren nach Anspruch 1, das ferner umfasst:

Identifizieren von Wavelet-Energie-Absorptionsanomalien innerhalb des interessierenden Gebiets aus dem mindestens einen Wavelet-Energie-Absorptionsfaktor; und
Erzeugen einer Anzeige der Wavelet-Energie-Absorptionsanomalien innerhalb des interessierenden Gebiets.

15. Verfahren nach Anspruch 14, bei dem das Identifizieren der Wavelet-Energie-Absorptionsanomalien umfasst:

Bestimmen einer Hintergrundfunktion aus dem Wavelet-Energie-Absorptionsfaktor; und
Vergleichen der Hintergrundfunktion mit dem Wavelet-Energie-Absorptionsfaktor, um die Wavelet-Energie-Absorptionsanomalien zu identifizieren.

16. Verfahren nach Anspruch 14, bei dem der mindestens eine Wavelet-Energie-Absorptionsfaktor eine Gasabsorption angibt.

17. Verfahren nach Anspruch 14, bei dem der mindestens eine Wavelet-Energie-Absorptionsfaktor eine Flüssigkeitsabsorption angibt.

18. Verfahren nach Anspruch 14, bei dem das Berechnen enthält:
Bestimmen von Wavelet-Energie-Absorptionsfaktorwerten, die eine Anpassung mit dem kleinsten quadratischen Fehler zwischen einem parametrisierten Modell und aus dem seismischen Datensatz extrahierten Wavelet-Spektren liefern.

19. Verfahren nach Anspruch 18, bei dem das parametrisierte Modell ausdrückbar ist als:

$$\hat{A}(\omega) = \begin{cases} a_1 + a_2\omega^{Q_L} & \text{für } 0 \leq \omega < \omega_D \\ a_3 e^{-Q_G\omega} & \text{für } \omega > \omega_D \end{cases}$$

wobei $\omega$ die Frequenz ist, $\omega_D$ eine Frequenz ist, bei der das Wavelet-Spektrum ein Maximum erreicht, $a_1$, $a_2$ und $a_3$ Konstanten sind, $Q_L$ ein Flüssigkeitsabsorptionsfaktor ist und $Q_G$ ein Gasabsorptionsfaktor ist.

20. Verfahren nach Anspruch 18, bei dem das parametrisierte Modell ausdrückbar ist als:

$$\hat{A}(\omega) = \begin{cases} a_1 + a_2 e^{Q_L \ln^{n}(\omega)} & \text{für } 0 \leq \omega < \omega_D \\ a_3 e^{-Q_G\omega} & \text{für } \omega > \omega_D \end{cases}$$

wobei ω die Frequenz ist, n eine reelle Zahl ist, $\omega_D$ eine Grundfrequenz ist, $a_1$, $a_2$ und $a_3$ Konstanten sind, $Q_L$ ein Flüssigkeitsabsorptionsfaktor ist und $Q_G$ ein Gasabsorptionsfaktor ist.

21. Verfahren nach Anspruch 18, bei dem das Berechnen ferner enthält:

Skalieren der aus dem seismischen Datensatz extrahierten Wavelet-Spektren auf eine Standardlänge vor dem Bestimmen.

22. Kohlenwasserstoff-Nachweissystem (230), das umfasst:

einen Arbeitsspeicher (236) mit Kohlenwasserstoff-Nachweissoftware; und
einen Prozessor (232), der mit dem Arbeitsspeicher (236) gekoppelt ist, um die Kohlenwasserstoff-Nachweissoftware auszuführen, wobei die Kohlenwasserstoff-Nachweissoftware den Prozessor (232) zum Wiedergewinnen seismischer Spurendaten aus einer Speichervorrichtung (238) konfiguriert und ferner den Prozessor (232) zum Erhalten von Zeitsignalen aus den seismischen Spurendaten für jeden von mehreren Orten in einem interessierenden Gebiet konfiguriert, um für jeden der mehreren Orte in dem interessierenden Gebiet ein Wavelet-Spektrum zu berechnen, um eine Grundfrequenz bei der maximalen Amplitude in dem Wavelet-Spektrum zu identifizieren und um ein parametrisiertes Modell unter und/oder über der Grundfrequenz an das Wavelet-Spektrum anzupassen, um für jeden der mehreren Orte in dem interessierenden Gebiet jeweils einen Flüssigkeits- und/oder Gas-Wavelet-Absorptionsfaktor zu bestimmen.

23. System (230) nach Anspruch 22, bei dem das parametrisierte Modell ausdrückbar ist als:

$$\hat{A}(\omega) = \begin{cases} a_1 + a_2\omega^{Q_L} & \text{für } 0 \le \omega < \omega_D \\ a_3 e^{-Q_G\omega} & \text{für } \omega > \omega_D \end{cases}$$

wobei ω die Frequenz ist, $\omega_D$ eine Frequenz ist, bei der das Wavelet-Spektrum ein Maximum erreicht, $a_1$, $a_2$ und $a_3$ Konstanten sind, $Q_L$ ein Flüssigkeitsabsorptionsfaktor ist und $Q_G$ ein Gasabsorptionsfaktor ist.

24. System (230) nach Anspruch 22, bei dem das parametrisierte Modell ausdrückbar ist als:

$$\hat{A}(\omega) = \begin{cases} a_1 + a_2 e^{Q_L \ln^n(\omega)} & \text{für } 0 \le \omega < \omega_D \\ a_3 e^{-Q_G\omega} & \text{für } \omega > \omega_D \end{cases}$$

wobei ω die Frequenz ist, n eine reelle Zahl ist, $\omega_D$ eine Grundfrequenz ist, $a_1$, $a_2$ und $a_3$ Konstanten sind, $Q_L$, ein Flüssigkeitsabsorptionsfaktor ist und $Q_G$ ein Gasabsorptionsfaktor ist.

25. System (230) nach Anspruch 22, bei dem die Kohlenwasserstoff-Nachweissoftware den Prozessor (232) zum Skalieren jedes Wavelet-Spektrums auf eine Standardlänge konfiguriert.

26. System (230) nach Anspruch 22, bei dem die Kohlenwasserstoff-Nachweissoftware als Teil des Berechnens des Wavelet-Spektrums für jeden von mehreren Orten den Prozessor (232) zum Ausführen einer Zeitinterpolation an den seismischen Spurendaten konfiguriert.

27. System (230) nach Anspruch 22, bei dem die Kohlenwasserstoff-Nachweissoftware als Teil des Konfigurierens des Prozessors (232) zum Verarbeiten der seismischen Spurendaten den Prozessor (232) zum Auswählen von Spurenintervallen mit einem Gleitfenster konfiguriert, den Prozessor (232) zum Anhängen von Spurenabtastwerten mit dem Wert null an die Spurenintervalle konfiguriert und den Prozessor (232) zum Ausführen einer Fourier-Transformation an jedem auf diese Weise erweiterten Spurenintervall konfiguriert, um entsprechende diskrete Frequenzspektren zu erhalten.

28. System (230) nach Anspruch 27, bei dem die Kohlenwasserstoff-Nachweissoftware als einen weiteren Teil des Konfigurierens des Prozessors (232) zum Verarbeiten der seismischen Spurendaten den Prozessor (232) zum Transformieren jedes diskreten Frequenzspektrums in ein entsprechendes Kepstrum konfiguriert und den Prozessor (232) ferner zum Bestimmen eines entsprechenden Wavelet-Spektrums aus Wavelet-Informationen in jedem Kepstrum konfiguriert.

**29.** System (230) nach Anspruch 22, bei dem die Kohlenwasserstoff-Nachweissoftware den Prozessor (232) ferner zum Bestimmen einer Hintergrundabsorptionsfunktion für den Wavelet-Absorptionsfaktor konfiguriert.

**30.** System (230) nach Anspruch 29, bei dem die Kohlenwasserstoff-Nachweissoftware als Teil des Bestimmens der Hintergrundabsorptionsfunktion den Prozessor (232) zum Anpassen einer Geraden oder einer glatten Kurve an den Wavelet-Energie-Absorptionsfaktor konfiguriert.

**31.** System (230) nach Anspruch 29, bei dem die Kohlenwasserstoff-Detektionssoftware den Prozessor (232) ferner zum Ermitteln von Absorptionsfaktoranomalien durch Kombinieren der Hintergrundabsorptionsfunktion mit dem Wavelet-Absorptionsfaktor konfiguriert.

**32.** System (230) nach Anspruch 31, bei dem die Kohlenwasserstoff-Nachweissoftware den Prozessor (232) als Teil des Kombinierens zum Subtrahieren der Hintergrundabsorptionsfunktion von dem Wavelet-Energie-Absorptionsfaktor konfiguriert, um eine Abweichungskurve zu bestimmen, und den Prozessor (232) ferner zum Extrahieren von Abweichungskurvenwerten über einem Schwellenwert konfiguriert, um Absorptionsfaktoranomalien zu ermitteln.

**33.** System (230) nach Anspruch 31, bei dem das System (230) ferner umfasst:

eine Anzeige (242), die mit dem Prozessor (232) gekoppelt ist,
wobei die Kohlenwasserstoff-Nachweissoftware den Prozessor (232) zum Anzeigen der Absorptionsfaktoranomalien als eine Funktion des Ortes konfiguriert.

**34.** System (230) nach Anspruch 33, bei dem die Kohlenwasserstoff-Nachweissoftware den Prozessor (232) zum Identifizieren mindestens einer Absorptionsfaktoranomalie, die einen Schwellenwert übersteigt, als eine wahrscheinliche Kohlenwasserstofflagerstätte konfiguriert.


**Revendications**

**1.** Procédé de détection d'hydrocarbures, le procédé comprenant :

l'obtention de données de traces sismiques pour une région d'intérêt ;
l'obtention de signaux de temps à partir desdites données de traces sismiques pour de multiples positions dans la région d'intérêt ;
le calcul d'un spectre du type ondelette pour chacune de multiples positions dans la région d'intérêt ;
l'identification d'une fréquence dominante à l'amplitude maximale dans ledit spectre du type ondelette ; et
l'adéquation d'un modèle paramétré au spectre du type ondelette au-dessous et/ou au-dessus de ladite fréquence dominante pour déterminer respectivement un facteur d'absorption du type ondelette de liquide et/ou de gaz pour chacune desdites multiples positions dans la région d'intérêt.

**2.** Procédé selon la revendication 1, dans lequel le modèle paramétré peut être exprimé en tant que :

$$\hat{A}(w) = \begin{cases} a_1 + a_2 \omega^{Q_L} & \text{pour } 0 \leq \omega < \omega_D \\ a_3 e^{-Q_G \omega} & \text{pour } \omega > \omega_D \end{cases}$$

où $\omega$ est une fréquence, $\omega_D$ est une fréquence dominante, $a_1$, $a_2$ et $a_3$ sont des constantes, $Q_L$ est un facteur d'absorption de liquide, et $Q_G$ est un facteur d'absorption de gaz.

**3.** Procédé selon la revendication 1, dans lequel le modèle paramétré peut être exprimé en tant que :

$$\tilde{A}(w) = \begin{cases} a_1 + a_2 e^{Q_L \ln^n(\omega)} & pour \ 0 \le \omega < \omega_D \\ a_3 e^{-Q_G \omega} & pour \ \omega > \omega_D \end{cases}$$

où ω est une fréquence, n est un nombre réel, $\omega_D$ est une fréquence dominante, $a_1$, $a_2$ et $a_3$ sont des constantes, $Q_L$ est un facteur d'absorption de liquide, et $Q_G$ est un facteur d'absorption de gaz.

4. Procédé selon la revendication 1, dans lequel ladite adéquation comprend :

la mise à l'échelle du spectre du type ondelette à une longueur prédéterminée.

5. Procédé selon la revendication 1, dans lequel ledit calcul comprend :

l'exécution d'une interpolation de temps sur les données de traces.

6. Procédé selon la revendication 1, dans lequel ledit calcul comprend :

la sélection d'intervalles de traces avec une fenêtre glissante ;
le remplissage des intervalles de traces avec des valeurs de zéro ; et
l'exécution d'une transformée de Fourier sur les intervalles de traces remplis de zéros pour déterminer des spectres de fréquences discrètes.

7. Procédé selon la revendication 6, dans lequel ledit calcul comprend en outre :

la transformation de chacun des spectres de fréquences discrètes en un cepstre correspondant ;
la séparation des informations du type ondelette dans chaque cepstre d'informations de réflectivité ; et
la détermination d'un spectre du type ondelette correspondant à partir des informations du type ondelette dans chaque cepstre.

8. Procédé selon la revendication 1, comprenant en outre :

la détermination d'une fonction d'absorption d'arrière-plan pour l'au moins un facteur d'absorption d'énergie du type ondelette.

9. Procédé selon la revendication 8, dans lequel ladite détermination comprend :

l'adéquation d'une ligne droite ou d'une courbe régulière à l'au moins un facteur d'absorption d'énergie du type ondelette.

10. Procédé selon la revendication 8, comprenant en outre :

le dépistage d'anomalies de facteur d'absorption en comparant la fonction d'absorption d'arrière-plan à l'au moins un facteur d'absorption d'énergie du type ondelette.

11. Procédé selon la revendication 10, dans lequel ladite comparaison comprend :

la soustraction de la fonction d'absorption d'arrière-plan à l'au moins un facteur d'absorption d'énergie du type ondelette pour produire les anomalies de facteur d'absorption.

12. Procédé selon la revendication 10, comprenant en outre :

l'affichage des anomalies de facteur d'absorption en fonction de la position.

13. Procédé selon la revendication 12, comprenant en outre :

l'identification d'au moins une anomalie de facteur d'absorption qui dépasse un seuil en tant que réservoir d'hydrocarbures probable.

**14.** Procédé selon la revendication 1, comprenant en outre :

l'identification d'anomalies d'absorption d'énergie du type ondelette dans la région d'intérêt à partir de l'au moins un facteur d'absorption d'énergie du type ondelette ; et
la génération d'un affichage des anomalies d'absorption d'énergie du type ondelette dans la région d'intérêt.

**15.** Procédé selon la revendication 14, dans lequel ladite identification des anomalies d'absorption d'énergie du type ondelette comprend :

la détermination d'une fonction d'arrière-plan à partir du facteur d'absorption d'énergie du type ondelette ; et
la comparaison de la fonction d'arrière-plan au facteur d'absorption d'énergie du type ondelette pour identifier les anomalies d'absorption d'énergie du type ondelette.

**16.** Procédé selon la revendication 14, dans lequel l'au moins un facteur d'absorption d'énergie du type ondelette est indicatif de l'absorption de gaz.

**17.** Procédé selon la revendication 14, dans lequel l'au moins un facteur d'absorption d'énergie du type ondelette est indicatif de l'absorption de liquide.

**18.** Procédé selon la revendication 14, dans lequel ledit calcul comprend :

la détermination de valeurs de facteur d'absorption d'énergie du type ondelette fournissant une adéquation d'erreur par moindres carrés entre un modèle paramétré et des spectres du type ondelette extraits de l'ensemble de données sismiques.

**19.** Procédé selon la revendication 18, dans lequel le modèle paramétré peut être exprimé en tant que :

$$\hat{A}(w) = \begin{cases} a_1 + a_2 \omega^{Q_L} & \text{pour } 0 \le \omega < \omega_D \\ a_3 e^{-Q_G \omega} & \text{pour } \omega > \omega_D \end{cases}$$

où $\omega$ est une fréquence, $\omega_D$ est une fréquence à laquelle le spectre du type ondelette atteint un maximum, $a_1$, $a_2$ et $a_3$ sont des constantes, $Q_L$ est un facteur d'absorption de liquide, et $Q_G$ est un facteur d'absorption de gaz.

**20.** Procédé selon la revendication 18, dans lequel le modèle paramétré peut être exprimé en tant que :

$$\hat{A}(w) = \begin{cases} a_1 + a_2 e^{Q_L \ln^n(\omega)} & \text{pour } 0 \le \omega < \omega_D \\ a_3 e^{-Q_G \omega} & \text{pour } \omega > \omega_D \end{cases}$$

où $\omega$ est une fréquence, $n$ est un nombre réel, $\omega_D$ est une fréquence dominante, $a_1$, $a_2$ et $a_3$ sont des constantes, $Q_L$ est un facteur d'absorption de liquide, et $Q_G$ est un facteur d'absorption de gaz.

**21.** Procédé selon la revendication 18, dans lequel ledit calcul comprend en outre :

la mise à l'échelle des spectres du type ondelette extraits de l'ensemble de données sismiques à une longueur standard avant ladite détermination.

**22.** Système de détection d'hydrocarbures (230) comprenant :

une mémoire (236) ayant un logiciel de détection d'hydrocarbures ; et
un processeur (232) couplé à la mémoire (236) pour exécuter le logiciel de détection d'hydrocarbures, dans lequel le logiciel de détection d'hydrocarbures configure le processeur (232) pour extraire des données de traces sismiques d'un dispositif de stockage (238), et configure en outre le processeur (232) pour obtenir des signaux de temps des données de traces sismiques pour chacune de multiples positions dans une région d'intérêt, pour calculer un spectre du type ondelette pour chacune de multiples positions dans la région d'intérêt, pour identifier une fréquence dominante à l'amplitude maximale dans ledit spectre du type ondelette, et pour mettre en adéquation un modèle paramétré avec le spectre du type ondelette au-dessous et/ou au-dessus de la fréquence dominante pour déterminer respectivement un facteur d'absorption du type ondelette de liquide et/ou de gaz pour chacune des multiples positions dans la région d'intérêt.

**23.** Système (230) selon la revendication 22, dans lequel le modèle paramétré peut être exprimé en tant que :

$$\tilde{A}(w) = \begin{cases} a_1 + a_2 \omega^{Q_L} & pour\ 0 \leq \omega < \omega_D \\ a_3 e^{-Q_G \omega} & pour\ \omega > \omega_D \end{cases}$$

où $\omega$ est une fréquence, $\omega_D$ est une fréquence à laquelle le spectre du type ondelette atteint un maximum, $a_1$, $a_2$ et $a_3$ sont des constantes, $Q_L$ est un facteur d'absorption de liquide, et $Q_G$ est un facteur d'absorption de gaz.

**24.** Système (230) selon la revendication 22, dans lequel le modèle paramétré peut être exprimé en tant que :

$$\tilde{A}(w) = \begin{cases} a_1 + a_2 e^{Q_L \ln^n(\omega)} & pour\ 0 \leq \omega < \omega_D \\ a_3 e^{-Q_G \omega} & pour\ \omega > \omega_D \end{cases}$$

où $\omega$ est une fréquence, n est un nombre réel, $\omega_D$ est une fréquence dominante, $a_1$, $a_2$ et $a_3$ sont des constantes, $Q_L$ est un facteur d'absorption de liquide, et $Q_G$ est un facteur d'absorption de gaz.

**25.** Système (230) selon la revendication 22, dans lequel le logiciel de détection d'hydrocarbures configure le processeur (232) pour mettre à l'échelle chaque spectre du type ondelette à une longueur standard.

**26.** Système (230) selon la revendication 22, dans lequel dans le cadre du calcul du spectre du type ondelette pour chacune des multiples positions, le logiciel de détection d'hydrocarbures configure le processeur (232) pour effectuer une interpolation de temps sur les données de traces sismiques.

**27.** Système (230) selon la revendication 22, dans lequel dans le cadre de la configuration du processeur (232) pour traiter les données de traces sismiques, le logiciel de détection d'hydrocarbures configure le processeur (232) pour sélectionner des intervalles de traces avec une fenêtre glissante, configure le processeur (232) pour annexer des échantillons de traces de valeur de zéro aux intervalles de traces, et configure le processeur (232) pour effectuer une transformée de Fourier sur chaque intervalle de traces étendu de cette manière pour obtenir des spectres de fréquences discrètes correspondants.

**28.** Système (230) selon la revendication 27, dans lequel dans un autre cadre de la configuration du processeur (232) pour traiter les données de traces sismiques, le logiciel de détection d'hydrocarbures configure le processeur (232) pour transformer chaque spectre de fréquences discrètes en un cepstre correspondant, et configure en outre le processeur (232) pour déterminer un spectre du type ondelette correspondant à partir des informations du type ondelette dans chaque cepstre.

**29.** Système (230) selon la revendication 22, dans lequel le logiciel de détection d'hydrocarbures configure en outre le processeur (232) pour déterminer une fonction d'absorption d'arrière-plan pour le facteur d'absorption du type ondelette.

**30.** Système (230) selon la revendication 29, dans lequel dans le cadre de la détermination de la fonction d'absorption d'arrière-plan, le logiciel de détection d'hydrocarbures configure le processeur (232) pour effectuer l'adéquation d'une ligne droite ou d'une courbe régulière au facteur d'absorption d'énergie du type ondelette.

**31.** Système (230) selon la revendication 29, dans lequel le logiciel de détection d'hydrocarbures configure en outre le processeur (232) pour dépister des anomalies de facteur d'absorption en combinant la fonction d'absorption d'arrière-plan avec le facteur d'absorption du type ondelette.

**32.** Système (230) selon la revendication 31, dans lequel dans le cadre de ladite combinaison, le logiciel de détection d'hydrocarbures configure le processeur (232) pour soustraire la fonction d'absorption d'arrière-plan du facteur d'absorption d'énergie du type ondelette pour déterminer une courbe de déviation, et configure en outre le processeur (232) pour extraire des valeurs de courbe de déviation au-dessus d'un seuil pour dépister des anomalies de facteur d'absorption.

**33.** Système (230) selon la revendication 31, dans lequel le système (230) comprend en outre :

un affichage (242) couplé au processeur (232),
dans lequel le logiciel de détection d'hydrocarbures configure le processeur (232) pour afficher les anomalies de facteur d'absorption en fonction de la position.

**34.** Système (230) selon la revendication 33, dans lequel le logiciel de détection d'hydrocarbures configure le processeur (232) pour identifier au moins une anomalie de facteur d'absorption qui dépasse un seuil en tant que réservoir d'hydrocarbures probable.

# Fig. 1

# Fig. 2

**Fig. 3**

```
        ┌──────────────────────────┐
        │      OBTAIN DATA SET      │
        └──────────────────────────┘
     300           │
                   ▼
        ┌──────────────────────────┐
        │     ACQUIRE AND STORE     │
        │     RAW SEISMIC DATA      │
        └──────────────────────────┘
     302           │
                   ▼
        ┌──────────────────────────┐
        │       RETRIEVE RAW        │
        │       SEISMIC DATA        │
        └──────────────────────────┘
     304           │
                   ▼
        ┌ ─ ─ ─ ─ ─ ─ ─ ─ ─ ─ ─ ─ ┐
          PERFORM PRE-STACK
        │      PROCESSING          │
        └ ─ ─ ─ ─ ─ ─ ─ ─ ─ ─ ─ ─ ┘
     306           │
                   ▼
        ┌ ─ ─ ─ ─ ─ ─ ─ ─ ─ ─ ─ ─ ┐
                PERFORM
        │       STACKING           │
        └ ─ ─ ─ ─ ─ ─ ─ ─ ─ ─ ─ ─ ┘
     308           │
                   ▼
        ┌──────────────────────────┐
        │    STORE SEISMIC DATA     │
        │    SET IN TRACE FORM      │
        └──────────────────────────┘
     310           │
                   ▼
        ┌──────────────────────────┐
        │           STOP           │
        └──────────────────────────┘
```

# Fig. 4

```
(DETECT HYDROCARBONS)              (        STOP        )
      400                                      ▲
       │                                       │
       ▼                              ┌──────────────────────┐
┌──────────────────────┐             │  DISPLAY ATTENUATION   │
│   IDENTIFY REGION OF   │            │      ANOMALIES         │
│      INTEREST          │            └──────────────────────┘
└──────────────────────┘              432            ▲
  402  │                                              │
       ▼                              ┌──────────────────────┐
┌──────────────────────┐             │  OBTAIN NEXT TRACE IN  │
│   OBTAIN FIRST TRACE IN │ ─────┐    │  REGION OF INTEREST    │
│   REGION OF INTEREST   │       │    └──────────────────────┘
└──────────────────────┘        │     430      N ▲
  404  │◄───────────────────────┘               │
       ▼                                  ╱─────────────╲    Y
┌──────────────────────┐                 ⟨ LAST TRACE IN ROI? ⟩────┐
│    INTERPOLATE IN      │                 ╲─────────────╱          │
│   TIME/SPACE DOMAIN    │                  428      ▲              │
└──────────────────────┘                            │              │
  406  │                              ┌──────────────────────┐     │
       ▼                              │     SCREEN OUT         │     │
┌──────────────────────┐             │     BACKGROUND         │     │
│  SELECT FIRST INTERVAL │            └──────────────────────┘     │
│  IN REGION OF INTEREST │             426     ▲                    │
└──────────────────────┘       ┌────────────────┘                  │
  408  │◄──────────────────────┘                                    │
       ▼                              ┌──────────────────────┐     │
┌──────────────────────┐             │  SELECT NEXT INTERVAL  │     │
│      PERFORM           │            │  IN REGION OF INTEREST │◄────┘
│   ZERO-PADDED FFT      │            └──────────────────────┘
└──────────────────────┘              424      N ▲
  410  │                                         │
       ▼                                  ╱─────────────╲    Y
┌──────────────────────┐                 ⟨ LAST TRACE INTERVAL? ⟩──┐
│     EXTRACT            │                 ╲─────────────╱          │
│     WAVELET            │                  422      ▲              │
└──────────────────────┘                            │              │
  412  │                              ┌──────────────────────┐     │
       ▼                              │    DETERMINE GAS       │     │
┌──────────────────────┐             │  ATTENUATION FACTOR    │     │
│   COMPENSATE FOR       │            └──────────────────────┘     │
│  VELOCITY DISPERSION   │             420      ▲                    │
└──────────────────────┘                        │                    │
  414  │                              ┌──────────────────────┐     │
       ▼                              │   DETERMINE LIQUID     │     │
┌──────────────────────┐             │  ATTENUATION FACTOR    │     │
│   IDENTIFY DOMINANT    │            └──────────────────────┘     │
│     FREQUENCY          │             418      ▲                    │
└──────────────────────┘                        │                    │
  416  │                                         │                    │
       └─────────────────────────────────────────┘
```

# Fig. 5

```
  ( INTERPOLATE IN TIME )
500
          ↓
  ┌─────────────────────┐
  │ PERFORM DISCRETE    │
  │ FOURIER TRANSFORM   │
  └─────────────────────┘
502
          ↓
  ┌─────────────────────┐
  │ ZERO-PAD AT HIGH    │
  │ FREQUENCIES         │
  └─────────────────────┘
504
          ↓
  ┌─────────────────────┐
  │ PERFORM INVERSE     │
  │ TRANSFORM           │
  └─────────────────────┘
506
          ↓
  (       STOP          )
```

# Fig. 6

```
  ( EXTRACT WAVELET )
600
          ↓
  ┌─────────────────────┐
  │ CALCULATE           │
  │ CEPSTRUM            │
  └─────────────────────┘
602
          ↓
  ┌─────────────────────┐
  │ IDENTIFY AND ZERO NON-│
  │ WAVELET ENERGY      │
  └─────────────────────┘
604
          ↓
  ┌─────────────────────┐
  │ CALCULATE WAVELET   │
  │ SPECTRUM            │
  └─────────────────────┘
606
          ↓
  (       STOP          )
```

# Fig. 7

```
  ( COMPENSATE        )
  ( DISPERSION        )
700
          ↓
  ┌─────────────────────┐
  │ DETERMINE SCALE     │
  │ FACTOR              │
  └─────────────────────┘
702
          ↓
  ┌─────────────────────┐
  │ SCALE SPECTRUM ALONG│
  │ FREQUENCY AXIS      │
  └─────────────────────┘
704
          ↓
  (       STOP          )
```

# Fig. 8

Fig. 9c

Fig. 9b

Fig. 9a

**Fig. 10**

1002

GAS on OIL

(a) PSTM STACK

27 BCFG
GAS

(b) GAS FACTOR

2.323 MMBO
OIL

(c) LIQUID FACTOR

**Fig. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5414674 A, Lichman

### Non-patent literature cited in the description

- **Pride et al.** Permeability Dependence of Seismic Amplitudes. *The Leading Edge,* 2003, vol. 22 (6), 518-25
- **Lichman et al.** Direct Gas Reservoir Detection from Seismic Wavelets Using Absorption. *The Oil and Gas Journal,* 05 January 2004, 32-37
- Wavelet Energy Absorption - 1: Direct Hydrocarbon Detection by Wavelet Energy Absorption. *The Oil and Gas Journal,* 12 January 2004, 34-39
- Wavelet Energy Absorption - 2: Here Are Velocity Aspects of Wavelet Energy Absorption. *The Oil and Gas Journal,* 19 January 2004, 36-44
- Wavelet Energy Absorption - 3: Four Examples Show Functions of Wavelet Energy Absorption. *The Oil and Gas Journal,* 25 January 2004, 48-52
- **E. Lichman.** Phase Inversion Deconvolution for Surface Consistent Processing and Multiple Attenuation. *SEG 69th Annual Meeting Expanded Abstracts,* 1299-1302
- **E. Lichman.** Automated Phase-based Moveout Correction. *SEG 69th Annual Meeting,* 1999
- **Lichman.** Informational Capacity of Wavefield Measurements. *J. of Computational Acoustics,* 2001, vol. 9 (4), 1395-1406